Europäisches Patentamt

**European Patent Office**

Office européen des brevets

(19)

(11) Numéro de publication : **0 192 690**
**B1**

(12) FASCICULE DE BREVET EUROPÉEN

(45) Date de publication du fascicule du brevet :
**25.05.88**

(51) Int. Cl.⁴ : **A 47 F 5/08**, G 06 F 15/24,
**A 47 F 10/02**, B 65 G 1/04

(21) Numéro de dépôt : **85904259.0**

(22) Date de dépôt : **28.08.85**

(86) Numéro de dépôt international :
**PCT/FR 85/00232**

(87) Numéro de publication internationale :
**WO/8601386 (13.03.86 Gazette 86/06)**

(54) **SYSTEME DE REAPPROVISIONNEMENT DE PRESENTOIRS.**

(30) Priorité : **31.08.84 FR 8413598**

(43) Date de publication de la demande :
**03.09.86 Bulletin 86/36**

(45) Mention de la délivrance du brevet :
**25.05.88 Bulletin 88/21**

(84) Etats contractants désignés :
**AT BE CH DE FR GB IT LI LU NL SE**

(56) Documents cités :
**FR-A- 2 139 208**
**GB-A- 2 134 679**
**US-A- 3 348 030**
**US-A- 3 651 478**
**319 Systems Technology, 15 September 1972, Liverpool,GB Lakhani and Wood:"A new dimension in data capture", pages 9-12**

(73) Titulaire : **VYNEX, Société anonyme française dite:**
**Balaives**
**F-08160 Flize (FR)**

(72) Inventeur : **DECHIROT, Jean-Pierre**
**3, avenue de Gaulle**
**Balan F-08200 Sedan (FR)**

(74) Mandataire : **Gérardin, Robert Jean René**
**Cabinet Robert Gérardin 3A, avenue Georges Clémenceau Boîte Postale 2 719**
**F-51055 Reims Cédex (FR)**

Jouve, 18, rue St-Denis, 75001 Paris, France

## Description

L'invention concerne un système de réapprovisionnement automatique et informatisé de produits conditionnés en sachets, sur cartes ou en boîtes, suspendus, par l'intermédiaire d'une languette perforée, aux broches des présentoirs de magasins, permettant de déterminer la quantité à réapprovisionner par article à partir de la longueur laissée libre sur la broche, en utilisant un détecteur approprié et un micro-ordinateur.

La méthode utilisée la plus couramment actuellement, pour évaluer les stocks et déterminer les réassortiments à effectuer, consiste à lire le code barre ou autres codes alphanumériques d'identification figurant sur l'un des conditionnements de chaque produit à l'aide, par exemple, d'un crayon lecteur, à compter de façon traditionnelle le nombre de conditionnements restant sur chaque broche, à enregistrer ces informations, puis à les transmettre à l'unité centrale, généralement par l'intermédiaire d'un coupleur acoustique.

Cette solution présente l'inconvénient d'être longue et fastidieuse et de permettre des erreurs de comptage susceptibles de se traduire par des ruptures de stocks ou des surstocks très préjudiciables.

On connaît déjà, cependant, un système de réapprovisionnement correspondant au préambule de la revendication 1 (brevet d'invention FR-A-2 139 208). Les broches, en forme de U, comportent, sur leur branche inférieure, plusieurs sections codées par couleur, disposées côte à côte, correspondant chacune à un nombre déterminé de sachets, de manière que l'inventaire puisse s'effectuer par l'examen des sections rendues visibles par l'enlèvement des sachets. Les indications correspondantes sont introduites dans un calculateur qui détermine automatiquement les quantités de marchandises à commander. Ce procédé et ce système ne facilitent en fait que le comptage visuel du nombre de conditionnements à réapprovisionner, en laissant subsister le risque d'erreur humaine.

On connaît aussi, un autre procédé et un autre système de réapprovisionnement correspondant au préambule de la revendication 1 (brevet USA-3651 478) qui utilise un dispositif optique qui fournit une image, de taille variable, de chaque conditionnement situé en bout de rangée, selon son éloignement, qui est fonction de la quantité restante par article sur les présentoirs. L'image est convertie en signal électrique qui est ensuite comparé à un signal de référence correspondant au rayon ou à une broche de présentoir complet.

Le résultat de cette comparaison est transmis à un calculateur qui détermine, pour chaque article, la quantité à réapprovisionner. Ce procédé et ce système font appel à un appareillage fixe exigeant notamment le montage, à distance déterminée, d'un dispositif optique de mesure pour chaque broche et l'utilisation de conditionnements de dimensions bien déterminées et bien précises.

Il existe aussi, à l'arrière plan technologique (brevet US-A 3.348.030) un appareil qui permet, par l'intermédiaire d'un système photoélectrique, de visualiser et d'enregistrer la situation des stocks de produits suspendus à des barres, tels que des vêtements présentés sur cintre. Un détecteur, comportant une lampe d'éclairage et une cellule photo-électrique, se déplace sur un rail support situé juste au-dessus de la barre à laquelle sont accrochés les cintres, dans des sections bien déterminées par article. Ce détecteur, entraîné par un système de câbles et de moteur électrique, retransmet à un calculateur un signal proportionnel au nombre d'articles existant dans chaque section. La quantité correspondante est retransmise, à la fois, à un afficheur et à une imprimante. Le franchissement de chaque section est identifié par l'intermédiaire d'un micro-contacteur disposé sous le détecteur, et de doigts d'actionnements fixés à la barre et séparant les sections. Ce procédé et ce système seraient difficilement adaptables au réapprovisionnement de produits présentés sur broches, étant donné l'infrastructure qu'ils nécessitent, la place qu'ils exigent, et les contraintes qu'ils imposeraient dans ce domaine particulier d'application.

La présente invention a pour but de remédier aux inconvénients présentés par les procédés et les dispositifs ci-dessus évoqués. L'invention, telle qu'elle est caractérisée dans les revendications, résout le problème de la détermination automatique des réassortiments à effectuer et de la situation des stocks, dans les points de vente de produits présentés sur broches, et de l'exécution directe des calculs, vérifications, corrections, inventaires, etc..., à partir des données physiques prélevées en utilisant un dispositif portatif.

Selon un premier mode de réalisation du système, permettant l'utilisation du procédé, la détermination automatique de la quantité à réapprovisionner par article, à partir de la longueur laissée libre sur la broche, s'effectue par l'intermédiaire de barres tracées transversalement et régulièrement espacées sur toute la longueur utile de chaque broche, et d'un crayon lecteur raccordé au micro-ordinateur. Ce même crayon lecteur est utilisé pour identifier au préalable l'article présenté sur la broche concernée. Le meilleur moyen utilisable, pour munir les broches de barres, consiste à utiliser un ruban auto-collant préimprimé.

Ce mode de réalisation exigeant l'adaptation préalable des présentoirs, par mise en place sur chaque broche de ruban auto-collant préimprimé, il s'est avéré judicieux de réserver celui-ci à l'utilisation du procédé sur les nouvelles fabrications de présentoirs et de recourir à un autre mode de réalisation du système aux présentoirs existants conformément à la revendication 3, qui consiste à utiliser un émetteur-récepteur d'ultra-sons pour déterminer la longueur laissée libre sur chaque broche après avoir identifié l'article concerné à l'aide d'un crayon lecteur combiné et avoir repoussé tous les sachets contre le bord du présentoir. Le temps, séparant l'émission de la réception, étant alors fonction de la distance que l'on cherche précisément à mesurer.

Cet émetteur-récepteur d'ultra-sons est constitué d'un pistolet permettant l'émission et la réception d'ultra-sons entre l'extrémité du crochet et le premier conditionnement situé en tête de la rangée.

Ce pistolet comporte un émetteur de lumière de visée constitué d'une source lumineuse combinée à une chambre réfléchissante, à une lentille, à un filtre colorant et à des conduits réfléchissants. Le faisceau lumineux ainsi émis permet de visualiser la trajectoire des ondes sans risque d'erreur ni d'interférence.

L'émetteur et le récepteur d'ultra-sons sont constitués de pastilles piézo-électriques logées dans des lunettes coulissantes, réglables en écartement et en alignement, guidées de façon précise par des pions.

Le pistolet est muni, sur l'arrière, d'un affichage électronique, d'un voyant de disponibilité du micro-ordinateur et de deux voyants d'état des batteries ; sur le côté, d'un interrupteur d'alimentation générale et d'un interrupteur d'alimentation de la lampe de visée et, sur l'avant, d'un nez comportant des conduits de passage des ultra-sons, un tube réfléchissant de passage de la lumière de visée, une empreinte d'accrochage sur l'extrémité des broches et des clips de fixation du crayon lecteur.

Les impulsions enregistrées entre l'émission et la réception des ultra-sons sont comptées, mémorisées et transmises par action sur une gâchette et par l'intermédiaire d'une interface appropriée à un micro-calculateur, qui détermine la longueur laissée libre entre l'extrémité de la broche et le premier conditionnement de la rangée et transmet cette information au micro-ordinateur qui la transforme en quantité à réapprovisionner. Ce micro-ordinateur est combiné à une imprimante, à un lecteur de mini-cassettes et à un coupleur téléphonique acoustique. L'imprimante permet d'éditer directement sur papier la commande et/ou l'inventaire.

Les avantages obtenus grâce à cette invention, consistent essentiellement en ceci, qu'il est possible de déterminer automatiquement la quantité de produits manquants sur chaque broche et, par voie de conséquence, de connaître les existants et d'effectuer les prises de commande en données corrigées ; c'est-à-dire, en prenant en compte la référence du produit, en calculant directement la quantité à commander après avoir effectué d'éventuelles corrections en fonction de certaines données prévisionnelles, si la capacité du micro-ordinateur le permet, ou en transmettant directement l'ordre à une unité centrale.

La quantité à commander est donc ainsi fonction de la place disponible sur la broche concernée, mais elle est, dans tous les cas, comparée à la quantité optimum par broche, c'est-à-dire à la quantité maximum d'unités de ce produit devant se trouver sur la broche après mise en place de la commande et capable d'assurer les ventes jusqu'à la mise en place de la commande suivante. La quantité optimum par broche est calculée sur la base d'historiques de ventes et transmise au micro-ordinateur intégré au système.

Les éléments du système sont contenus dans une mallette conçue de telle manière que l'utilisateur puisse extraire et ranger aisément le pistolet muni de son crayon-lecteur, ainsi que le micro-ordinateur qui, seuls, sont nécessaires à la prise de commande. A la mise sous tension, les appareils répondent à une séquence d'instruction de contrôle destinée à s'assurer du bon fonctionnement de l'ensemble.

Le procédé et le système selon l'invention, se distinguent donc par leur facilité de mise en oeuvre et leur souplesse d'utilisation, puisqu'ils sont utilisables sans restriction sur toutes les broches de présentoirs, quelles que soient la forme et la nature des conditionnements qui y sont suspendus, sous réserve, uniquement, que l'épaisseur des dits conditionnements aient été pris en compte au préalable dans le programme de calcul.

L'invention est exposée ci-après, plus en détail à l'aide de dessins représentant la meilleure manière de la réaliser.

La figure 1 représente, une vue en coupe longitudinale d'un pistolet de mesure à ultra-sons, en place à l'extrémité d'une broche.

La figure 2 représente, une vue en coupe transversale donnant le détail du dispositif de réglage en position de l'émetteur et du récepteur piézo-électriques.

La figure 3 représente, une vue de côté d'une broche munie de barres de mesure de longueur.

La figure 4 représente, le schéma bloc de l'interface électronique, incorporé au pistolet, situé entre l'émetteur-récepteur d'onde ultrasonore et le micro-ordinateur.

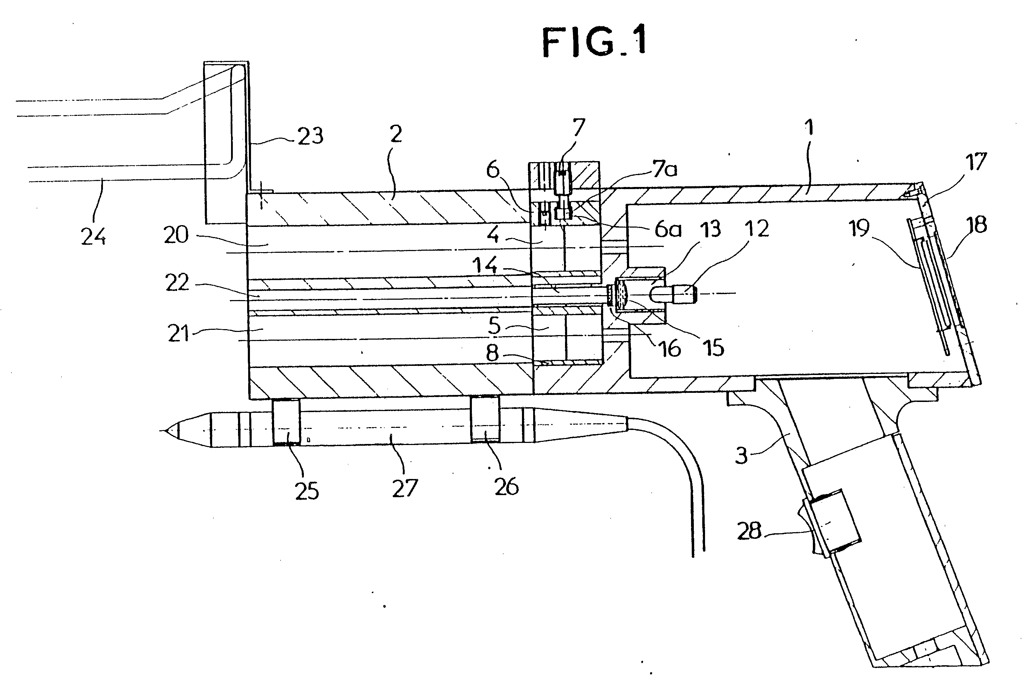

En examinant les figures 1, 2 et 4, on remarque que le pistolet comporte principalement un corps 1, un nez écarteur 2, une poignée 3, un émetteur 4 et un récepteur 5 d'ondes ultra-sonore, une lunette coulissante de réglage d'écartement 6 et sa vis molettée de réglage 7, une lunette coulissante de réglage d'alignement 8 et sa vis de réglage 9, des pions 10 et 11 de guidage des lunettes coulissantes, une source lumineuse 12, une chambre réfléchissante 13, un conduit 14, une lentille 15 et un filtre colorant 16, un panneau démontable 17 supportant un affichage électronique 18 et un circuit imprimé 19, des conduits 20 et 21 de passage des ultra-sons, un tube réfléchissant 22 de passage de la lumière de visée, une empreinte 23 de retenue sur l'avant des broches 24 et deux clips 25 et 26 de retenue du crayon-lecteur 27, une gâchette 28 de commande, et une interface comportant : un oscillateur 29 et un bloc de détection retour 30, un bloc de séquencement 31, un bloc d'affichage 32, un bloc de transmission série (TMS) 33, un bloc d'envoi de la mesure 34, une mémoire programmable 35, une horloge 36, un bloc d'ordre d'envoi de la mesure 37, un bloc d'initialisation 38, un indicateur de disponibilité du micro-ordinateur 39 et un bloc de liaison 40 au micro-ordinateur.

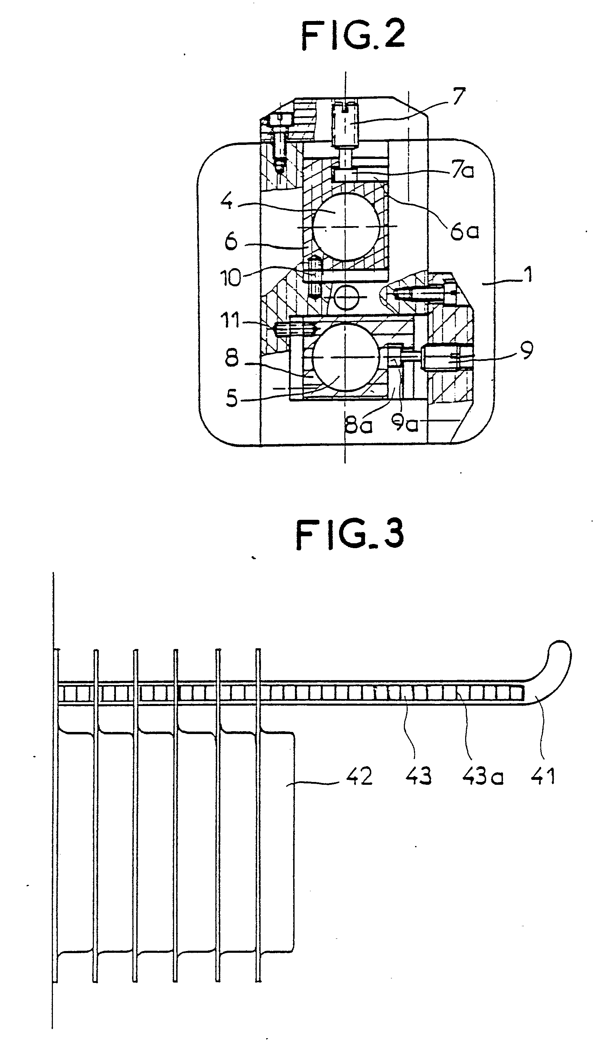

En examinant maintenant la figure 3, on remarque que le système utilisant des broches munies de barres de mesure de longueur comporte principalement les broches 41 supportant les conditionnements 42 et un ruban adhésif 43 comportant les barres de mesure de longueur.

En se reportant aux figures 1 et 2, on observe que le corps 1 est équipé, à l'avant, de l'émetteur et du récepteur d'ultra-sons 4 et 5, montés respectivement dans la lunette coulissante de réglage d'écartement 6, réglable par l'intermédiaire de la vis décolletée 7, dont l'extrémité 7a est introduite dans une rainure 6a aménagée dans la lunette, et dans la lunette coulissante de réglage d'alignement 8, réglable par l'intermédiaire de la vis décolletée 9, dont l'extrémité 9a est introduite dans une rainure 8a aménagée dans la lunette 8. Les deux lunettes coulissantes 6 et 8 sont maintenues de façon précise dans leur glissière par l'intermédiaire des pions 10 et 11. L'avant du corps 1 comporte aussi l'émetteur de lumière de visée constitué de la source lumineuse 12, fixée à l'entrée de la chambre réfléchissante 13, équipée de la lentille 15, prolongée par le conduit 14, muni du filtre colorant 16. Le corps 1 est muni, sur l'arrière, du panneau démontable 17 supportant l'affichage électronique 18, le circuit imprimé 19, le voyant de disponibilité du micro-ordinateur et deux voyants d'état des batteries électroniques d'alimentation et, sur le côté, un interrupteur d'alimentation générale et un interrupteur d'alimentation de la lampe de visée 12.

Le nez 2, prolongeant le corps 1 vers l'avant, comporte les conduits 20 et 21 de passage des ultra-sons et le tube réfléchissant 22 de passage de la lumière de visée ; ce nez écarteur 2 est muni, sur l'avant et sur le dessus, de l'empreinte 23 destinée à recevoir l'avant de la broche 24 et, en dessous, des clips 25 et 26 de retenue du crayon lecteur 27.

La poignée 3, qui se fixe sous le corps 1, est munie de la gâchette 28 de commande de transfert des informations au micro-ordinateur. Elle est évidée pour permettre le passage des câbles assurant la transmission série et l'alimentation.

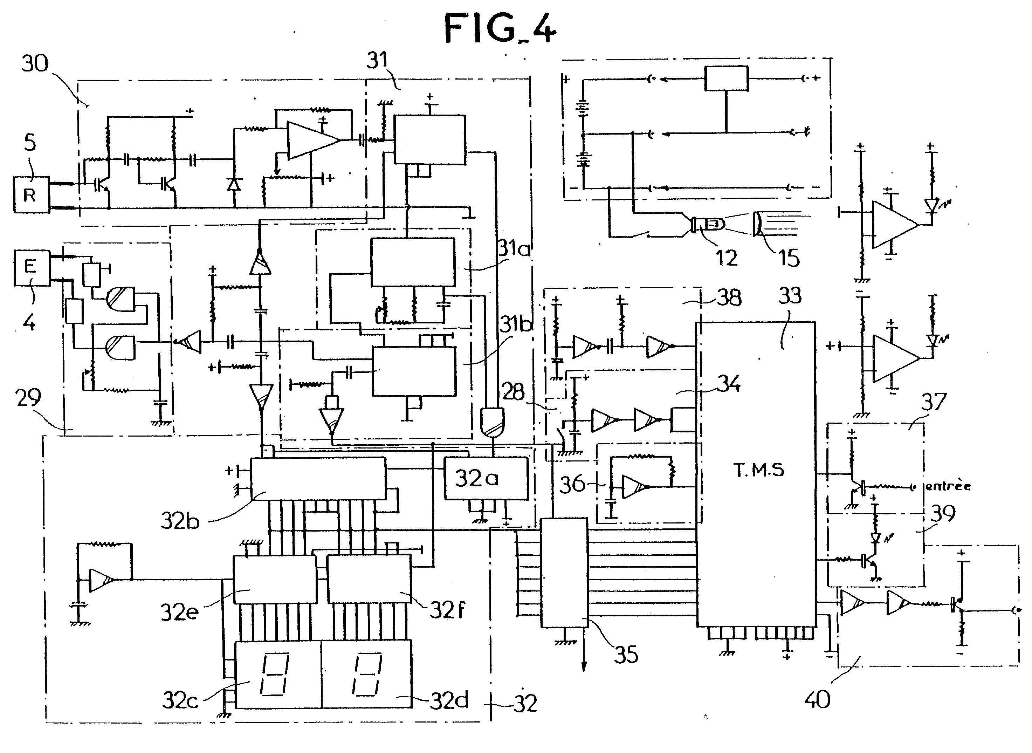

En se reportant maintenant au schéma correspondant à la figure 4, on observe que l'émetteur 4 et le récepteur 5 sont reliés respectivement par l'oscillateur 29 et le bloc de détection retour 30, au bloc de séquencement 31 comportant une horloge de base de temps 31a et une mémoire 31b destinée au comptage de la distance, relié au bloc d'affichage 32, comportant un compteur 32a et une mémoire 32b, reliée à deux afficheurs électroniques à cristaux liquides et à sept segments 32c et 32d par des décodeurs 32e et 32f. Le bloc de séquencement 31 et le bloc d'affichage 32 sont reliés au bloc de transmission série (TMS) 33 par l'intermédiaire du bloc d'envoi mesure 34 et de la mémoire programmable 35.

Le bloc de transmission série 33 est relié à l'horloge 36, au bloc d'ordre d'envoi de la mesure 37, au bloc d'initialisation 38, à l'indicateur de disponibilité du micro-ordinateur 39 et au micro-ordinateur par le bloc 40.

Ainsi, comme on le voit sur ce schéma, le système de mesure avec pistolet à ultra-sons étant équipé d'un émetteur et d'un récepteur piézo-électrique 4 et 5, il suffit que le bloc d'émission 29 envoit un signal très bref à l'émetteur 4 pour que celui-ci le transforme en vibrations acoustiques, situées dans la gamme ultrasonore, pour que l'obstacle, matérialisé par le premier conditionnement d'une rangée, renvoie celles-ci vers le récepteur 5.

Une initialisation du système de comptage étant effectuée au moment de l'émission, ce comptage se poursuit jusqu'à ce qu'un écho atteigne le récepteur 5.

Le nombre d'impulsions enregistrées pendant ce comptage, par la mémoire 32b, est communiqué au compteur 32a avec visualisation sur les afficheurs 32c et 32d et mémorisation dans la mémoire 35. Ces valeurs, enregistrées sur la demande du micro-ordinateur, sont transmises à un micro-calculateur, qui détermine la longueur libre existant entre l'extrémité de la broche et le premier conditionnement.

En se reportant à nouveau aux figures 1 et 2, et à la lumière des explications données ci-dessus, on remarque qu'il suffit à l'opérateur de repousser contre la paroi du présentoir les conditionnements concernés, après avoir lu le code barre par l'intermédiaire du crayon lecteur 27 fixé sous le pistolet, de mettre l'empreinte 23 montée à l'extrémité du nez 2 du pistolet en place sur l'extrémité de la broche 24, de vérifier, par l'intermédiaire du voyant situé à la partie arrière du pistolet, que le micro-ordinateur est disponible, de basculer l'interrupteur d'alimentation générale et l'interrupteur d'éclairage, d'orienter le pistolet jusqu'à obtention d'un spot lumineux sur le conditionnement situé à l'extrémité de la rangée, puis d'appuyer sur la gâchette 28 de déclenchement du transfert pour obtenir l'indication de la mesure sur l'afficheur et sa prise en compte par le micro-ordinateur sous réserve d'acceptation par ce dernier.

Il suffit de répéter cette opération autant de fois qu'il y a de broches sur le présentoir pour obtenir, comme on le voit, la saisie automatique par le micro-ordinateur, de l'ensemble des données nécessaires aux calculs de réapprovisionnement.

Ces informations sont traitées directement par le micro-ordinateur ou retransmises ultérieurement à l'unité centrale par coupleur acoustique ou tout autre moyen du genre.

L'opérateur dispose ainsi, sur les lieux de la saisie, des moyens d'obtenir une liste des produits à commander avec indication des prix et du montant total de la commande, puisque les indications nécessaires à ces calculs et les programmes correspondants sont enregistrés dans le micro-ordinateur, avec possibilité de mise à jour immédiate ou différée, par l'unité centrale, lors du transfert des données.

Si l'on se reporte maintenant à nouveau à la figure 3, on remarque que la broche 41, supportant les conditionnements 42, est munie, sur toute sa longueur utile, d'un ruban adhésif 43 comportant des barres régulièrement espacées 43a, qui permettent de déterminer la distance laissée libre entre le premier conditionnement de la rangée et l'extrémité du ruban, en utilisant le même crayon lecteur ou non que pour déchiffrer le code barre indiqué sur les conditionnements du produit concerné ; cette information est transmise automatiquement au calculateur du micro-ordinateur comme dans le cas précédent.

## Revendications

1. Système de réapprovisionnement automatique et informatisé de produits conditionnés en sachets, sur cartes ou en boîtes, suspendus par l'intermédiaire d'une languette perforée aux broches (41) de présentoirs de magasins, permettant de déterminer la quantité à réapprovisionner par article à partir de la longueur laissée libre sur la broche, en utilisant un détecteur approprié et un micro-ordinateur, caractérisé en ce que la détermination automatique de la quantité à réapprovisionner par article, à partir de la longueur laissée libre sur la broche (41), s'effectue par l'intermédiaire de barres tracées transversalement et régulièrement espacées (43a) sur toute la longueur utile de chaque broche (41) et d'un crayon lecteur raccordé au micro-ordinateur.

2. Système de réapprovisionnement selon la revendication 1, caractérisé en ce que les barres (43a) tracées transversalement sur les broches (41), sont pré-imprimées sur un ruban auto-collant (43).

3. Système de réapprovisionnement automatique et informatisé de produits conditionnés en sachets, sur cartes ou en boîtes, suspendus par l'intermédiaire d'une languette perforée aux broches (24) de présentoirs de magasins, permettant de déterminer la quantité à réapprovisionner par article à partir de la longueur laissée libre sur la broche (24), en utilisant un détecteur approprié et un micro-ordinateur, caractérisé en ce que la détermination automatique de la quantité à réapprovisionner par article, à partir de la longueur laissée libre sur la broche (24) s'effectue par l'intermédiaire d'un émetteur-récepteur (1) d'ultra-sons permettant l'émission et la réception d'ultra-sons entre l'extrémité de la broche (24) et le premier conditionnement (42) situé en tête de la rangée.

4. Système de réapprovisionnement selon la revendication 5, caractérisé en ce que l'émetteur-récepteur est un pistolet (1) permettant l'émission et la réception d'ultra-sons.

5. Système de réapprovisionnement selon la revendication 4, caractérisé en ce que le pistolet (1) est combiné à un crayon lecteur de code barre (27).

6. Système de réapprovisionnement selon la revendication 4, caractérisé en ce que le pistolet comporte un émetteur de lumière de visée constitué d'une source lumineuse (12) combinée à une chambre réfléchissante (13), une lentille (15), un filtre colorant (16) et des conduits réfléchissants (14 et 22).

7. Système de réapprovisionnement selon la revendication 4, caractérisé en ce que l'émetteur (4) et le récepteur (5) sont constitués de pastilles piézo-électriques logées dans des lunettes coulissantes (6 et 8) réglables en écartement et en alignement.

8. Système de réapprovisionnement selon la revendication 7, caractérisé en ce que le réglage des lunettes coulissantes (6 et 8) s'effectue par l'intermédiaire de vis décolletées (7 et 9) dont les extrémités (7a et 8a) sont introduites dans des rainures (6a et 8a) aménagées dans les lunettes (6 et 8).

9. Système de réapprovisionnement selon la revendication 7, caractérisé en ce que les lunettes coulissantes (6 et 8) sont guidées, de façon précise, par des pions (10 et 11).

10. Système de réapprovisionnement selon la revendication 4, caractérisé en ce que le pistolet est muni, sur l'arrière, d'un affichage électronique (18), d'un voyant de disponibilité du micro-ordinateur et de deux voyants d'état des batteries ; sur le côté, d'un interrupteur d'alimentation générale et d'un interrupteur d'alimentation de la lampe de visée et, sur l'avant, d'un nez (2) comportant : des conduits (20 et 21) de passage des ultra-sons et un tube réfléchissant (22) de passage de la lumière de visée, une empreinte (23) d'accrochage sur l'extrémité des broches et des clips (25 et 26) de fixation du crayon lecteur (27).

11. Système de réapprovisionnement selon la revendication 4, caractérisé en ce que les impulsions enregistrées entre l'émission et la réception des ondes sont comptées, mémorisées et transmises à un micro-calculateur par l'intermédiaire d'une interface appropriée.

## Claims

1. Automatic computerized system for refilling with products packed in bags, on cards or in boxes, hanging by means of a perforated tab from the rods of shop display units, making it possible to determine the quantity of each article to be refilled on the basis of the length remaining free on the pin, using a suitable detector and a micro-computer, characterised in that the automatic determination of the quantity to be refilled per article, on the basis of the length remaining free on the rod (41) is effected by means of bars drawn transversally and evenly spaced (43a) throughout the useful length of each rod (41) and a reading pencil connected to the micro-computer.

2. Refilling system according to Claim 1, characterised in that the bars (43a) drawn transversally on the rods (41) are pre-printed on a self-adhesive tape (43).

3. Automatic computerized system for refilling with products packed in bags, on cards or in boxes, hanging by means of a perforated tab from the rods (24) of shop display units, making it possible to determine the quantity of each article to be refilled on the basis of the length remaining free on the rod (24) using a suitable detector and a micro-computer, characterised in that the automatic determination of the quantity to be refilled per article, on the basis of the length remaining free on the rod (24) is effected by means of an ultrasonic transmitter-receiver (1) permitting ultrasonic transmission and reception between the end of the rod (24) and the first pack (42) situated at the head of the row.

4. Refilling system according to Claim 5, characterised in that the transmitter-receiver is a gun (1) permitting ultrasonic transmission and reception.

5. Refilling system according to Claim 5, characterised in that the gun (1) is combined with a bar code reading pencil (27).

6. Refilling system according to Claim 4, characterised in that the gun comprises an aiming light transmitter consisting in a light source (12) combined with a reflection chamber (13), a lens (15), a light filter (16) and reflecting ducts (14 and 22).

7. Refilling system according to Claim 4, characterised in that the transmitter (4) and the receiver (5) are constituted by piezo-electric pellets housed in telescopic tubes (6 and 8) the distance between, and the alignment of, which are adjustable.

8. Refilling system according to Claim 7, characterised in that the adjustment of the telescopic tubes (6 and 8) is effected by means of cutoff screws (7 and 9) the ends (7a and 8a) of which are introduced into grooves (6a and 8a) provided in the tubes (6 and 8).

9. Refilling system according to Claim 7, characterised in that the telescopic tubes (8 and 6) are guided in precise manner by studs (10 and 11).

10. Refilling system according to Claim 4, characterised in that the gun is provided at the rear with an electronic display (18), a visual indicator of the availability of the micro-computer and two visual indicators of the condition of the batteries ; on the side with a general supply cut-out and an aiming light supply cut-out and, at the front, with a nosepiece (2) comprising : ducts (20 and 21) along which the ultrasounds pass and a reflecting tube (22) for the passage of the aiming light, a hooking cavity (23) on the end of the rods and fixing clips (25 and 26) for the reading pencil (27).

11. Refilling system according to Claim 4, characterised in that the pulses recorded between the transmission and the reception of the waves are counted, stored and transmitted to a micro-computer through a suitable interface.

**Patentansprüche**

1. System zum automatischen und informationsgesteuerten Auffüllen von in Beuteln, auf Karten oder in Schachteln verpackten Produkten, die mittels eines perforierten Fortsatzes auf Dornen (41) von Schauständen in Geschäften aufgehängt werden, wobei die je Artikel aufzufüllende Menge von der auf dem Dorn freigelassenen Länge ausgehend bestimmt werden kann, indem man einen passenden Detektor und einen Mikrokomputer verwendet, dadurch gekennzeichnet, daß die automatische Bestimmung der je Artikel aufzufüllenden Menge, ausgehend von der Länge, die auf dem Dorn (41) freigelassen ist, mittels quer und in regelmäßigen Abständen (43a) entlang der geeigneten Länge jedes Dornes' (41) angebrachten Balken und einem mit dem Mikrocomputer verbundenen Lesestift durchgeführt wird.

2. System nach Anspruch 1, dadurch gekennzeichnet, daß die quer zum Dorn (41) angebrachten Balken (43a) auf einem Selbstklebeband (43) vorgedruckt sind.

3. System zum automatischen und informationsgesteuerten Auffülen von in Beuteln, auf Karten oder in Schachteln verpackten Produkten, die mittels eines perforierten Fortsatzes auf die Dorne (24) von Schauständen in Geschäften aufgehängt sind, wobei die je Artikel aufzufüllende Menge, ausgehend von der auf dem Dorn (24) freigelassenen Länge unter Verwendung eines geeigneten Detektors und eines Mikrocomputers bestimmt werden kann, dadurch gekennzeichnet, daß die automatische Bestimmung der je Artikel aufzufüllenden Menge ausgehend von der auf dem Dorn (24) freigelassenen Länge mittels eines Ultraschall-Sende-Empfängers durchgeführt wird, der die Aussendung und den Empfang von Ultraschall zwischen den Enden des Dornes (24) und der ersten am Anfang der Reihe befindlichen Verpackung (42) ermöglicht.

4. System zum Auffüllen nach Anspruch 3, dadurch gekennzeichnet, daß der Sende-Empfänger eine Pistole (1) ist, die die Aussendung und den Empfang des Ultraschalles ermöglicht.

5. System zum Auffüllen nach Anspruch 4, dadurch gekennzeichnet, daß die Pistole (1) mit einem Lesestift (27) für Balkenkodierungen verbunden ist.

6. System zum Auffülen nach Anspruch 4, dadurch gekennzeichnet, daß die Pistole eine Lichtquelle aufweist, die aus einer Lichtquelle (12), kombiniert mit einer reflektierenden Kammer (13), einer Linse (15), einem Farbfilter (16) und Reflexionsleitungen (17 und 22), besteht.

7. System zum Auffüllen nach Anspruch 4, dadurch gekennzeichnet, daß der Sender (4) und der Empfänger (5) aus piezo-elektrischen Plättchen bestehen, die in im Abstand und der Ausrichtung einstellbaren, verschieblichen Brillen (6 und 8) eingesetzt sind.

8. System zum Auffüllen nach Anspruch 7, dadurch gekennzeichnet, daß die Einstellung der verschieblichen Brillen (6 und 8) mit Hilfe von gedrehten Schrauben (7, 9) durchgeführt wird, deren Enden (7a und 9a) in Nuten (6a, 8a) liegen, die in die Brillen (6, 8) eingearbeitet sind.

9. System zum Auffüllen nach Anspruch 7, dadurch gekennzeichnet, daß die verschieblichen Brillen (6, 8) in genauer Weise durch Steine (10, 11) geführt sind.

10. System zum Auffüllen nach Anspruch 4, dadurch gekennzeichnet, daß die Pistole am hinteren Ende mit einer elektronischen Anzeige (18), einer Anzeige für die Bereitschaft des Mikrocomputers und zwei Anzeigen über den Batteriezustand, auf der Seite mit einem Hauptunterbrecher der Zuleitung und einem Unterbrecher der Zuleitung zur Richtlampe und am vorderen Ende mit einer Nase (2) versehen ist, die Durchtrittsleitungen (20, 21) für den Ultraschall und ein reflektierendes Rohr (22) für den Durchtritt des Richtlichtes, eine Matrize (23) für die Verankerung auf dem Ende der Dorne und Klips (25, 26) zur Befestigung des Lesestiftes (27) aufweist.

11. System zur Auffüllung nach Anspruch 4, dadurch gekennzeichnet, daß die zwischen der Aussendung und dem Empfang der Wellen festgestellten Impulse gezählt, gespeichert und über eine geeignete Grenzfläche einem Mikrocomputer zugeführt wird.

# FIG.1

0 192 690

# FIG.2

# FIG.3

# FIG_4

0 192 690